# EUROPÄISCHE PATENTSCHRIFT

(11) **EP 1 274 534 B1**
(45) Veröffentlichungstag und Bekanntmachung des Hinweises auf die Patenterteilung: **15.09.2004**
(21) Anmeldenummer: 01931424.4
(22) Anmeldetag: 06.04.2001
(51) Int. Cl.: B23K 26/06, B41C 1/10

(54) **VORRICHTUNG ZUR FOKUSSIERUNG EINES AUS EINER GLASFASER AUSTRETENDEN LASERSTRAHLS**
DEVICE FOR FOCUSING A LASER BEAM EXITING FROM A GLASS FIBER
DISPOSITIF POUR LA FOCALISATION D'UN FAISCEAU LASER EMERGEANT DIVERGENT D'UNE FIBRE DE VERRE

(30) Priorität: 14.04.2000 DE 10018546
(43) Veröffentlichungstag der Anmeldung: 15.01.2003
(73) Patentinhaber: Koenig & Bauer Aktiengesellschaft, 97080 Würzburg (DE)
(72) Erfinder: SCHASCHEK, Karl, Erich, Albert, 97289 Thüngen (DE)
(86) Internationale Anmeldenummer: PCT/DE2001/001349
(87) Internationale Veröffentlichungsnummer: WO 2001/078938

(56) Entgegenhaltungen:
- EP-A- 0 307 487
- EP-A- 0 580 394
- WO-A-98/25513
- US-A- 6 012 852

## Beschreibung

Die Erfindung betrifft eine Vorrichtung zur Fokussierung eines aus einer Glasfaser austretenden Laserstrahls gemäß dem Oberbegriff des Anspruchs 1.

Es ist bekannt, Laserdioden unterschiedlicher Leistung zur Bearbeitung von Oberflächen und insbesondere zur Bebilderung von Offset-Druckplatten einzusetzen. Hierbei werden Laserdioden verwendet, die Laserstrahlen erzeugen, die nahe dem IR-Bereich liegen.

Bei der Bebilderung von Offset-Druckplatten bestehen diese aus einem Substrat auf Kunststoffbasis, das beispielsweise durch die Beaufschlagung mit Laserlicht derart verändert wird, dass es in den beaufschlagten Bereichen oder Punkten eine Affinität gegenüber Druckfarbe gewinnt oder diese abstößt. Durch die Beaufschlagung mit dem Laserstrahl werden also eine Affinität gegenüber ölhaltiger Druckfarbe oder wasserabstoßende (hydrophobe) Bereiche oder Punkte geschaffen. Neben dieser Veränderung der Oberfläche kann diese durch die Beaufschlagung mit Laserlicht auch bereichs- oder punktweise in anderer Weise verändert oder abgetragen werden. Um die Oberfläche, beispielsweise eine Offset-Druckplatte, zu verändern oder abzutragen, ist es erforderlich, den aus der Laserdiode austretenden Laserstrahl, der durch eine Glasfaser oder eine andere geeignete optische Faser zu dem Anwendungsort geführt wird, zu fokussieren, um die erforderliche Energiedichte zu erreichen. Der in eine Glasfaser von einer Laserdiode eingeleitete Laserstrahl tritt aus dieser divergierend aus, wobei der Divergenzwinkel 5° bis 25° beträgt. Um also die erforderliche Energiedichte auf der zu bearbeitenden Oberfläche zu erzeugen, ist es erforderlich, den aus der Glasfaser austretenden Laserstrahl zu fokussieren.

Es ist bekannt, für ein die Laserstrahlen zuführendes Glasfaserbündel eine gemeinsame Optik oder aber eine Anordnung mehrerer Mikrolinsen zu verwenden.

Aus den EP 05 80 394 A2 und EP 06 20 670 A1 ist es bekannt, Offset-Druckplatten bildende Substrate aus Kunststoff dadurch mit Laserstrahlen zu bebildern, dass der divergierend aus der Laserdiode austretende Laserstrahl durch eine erste Optik gebündelt in eine Glasfaser eingeleitet und anschließend der aus der Glasfaser austretende divergierende Laserstrahl durch eine Glaslinsenoptik mit mehreren Linsen auf die Offset-Druckplatte fokussiert wird. Die bekannten optischen Systeme zur Fokussierung der Laserstrahlen erfordern neben teuren optischen Linsensystemen einen erheblichen Bauraum, der häufig kaum bereitzustellen ist. Wegen des erforderlichen Bauraums ist grundsätzlich auch die Anzahl der Dioden und der die Laserstrahlen zuführenden Glasfasern begrenzt, so dass dadurch auch die Bearbeitungs- bzw. Bebilderungsleistung vermindert ist. Um die Bearbeitungs- bzw. Bebilderungszeit zu verringern, muss die zur Verfügung stehende Leistung erhöht werden. Da Laserdioden grundsätzlich nur eine begrenzte und nicht steigerungsfähige Leistung besitzen, kann die Bearbeitungs- bzw. Bebilderungszeit nur durch die Erhöhung der Anzahl der Laserdioden verringert werden. Dieser Erhöhung der Anzahl der gleichzeitig die Oberfläche beaufschlagenden Laserdioden ist bei den bekannten Systemen jedoch durch die der Fokussierung dienenden optischen Systeme begrenzt.

Die DE 38 33 096 A1 und die JP 63-33717 A beschreiben, Fresnel-Linsen in Anordnungen zum Koppeln von Lichtleitern zu verwenden.

Die EP 0 307 487 A1 beschreibt eine optische Faser, an deren Ende eine Linse angebracht ist. Diese Linse besteht aus einem zylindrischen Teil, dessen Ende als Fresnel-Linse ausgebildet ist.

Der Erfindung liegt die Aufgabe zugrunde, eine Vorrichtung zur Fokussierung eines aus einer Glasfaser austretenden Laserstrahls, zu schaffen, mit der die Bebilderungszeit von Druckplatten verringert werden kann.

Die Aufgabe wird erfindungsgemäß durch die Merkmale des Anspruchs 1 gelöst.

Insbesondere soll eine Vorrichtung der eingangs angegebenen Art geschaffen werden, mit der sich Oberflächen, vorzugsweise Offset-Druckplatten, mit vertretbarem Aufwand und hoher Leistung bearbeiten bzw. bebildem lassen.

Erfindungsgemäß wird diese Aufgabe bei einer Vorrichtung der eingangs angegebenen Art dadurch gelöst, dass die Linse oder die Linsenanordnung durch eine Fresnel-Linse oder eine holografische Linse gebildet und in ein ebenes transparentes Substrat eingearbeitet und mit der rechtwinkelig zur Faserachse liegenden ebenen Stim- bzw. Austrittsseite der Glasfaser verbunden ist.

Fresnel-Linsen (Fresnel-Zonen-Platten) oder holografische Linsen zeichnen sich dadurch aus, dass sie aus flachen dünnen Platten oder Folien bestehen, so dass sie sich raumsparend anordnen lassen. Darüberhinaus lassen sich Fresnel-Linsen und holografische Linsen kostengünstig in großer Anzahl herstellen bzw. von einer Masterlinse kopieren, so dass die erfindungsgemäße Anordnung nicht nur einen raumsparenden Einbau ermöglicht, sondern gegenüber den bekannten optischen Linsensystemen auch zu einer erheblichen Kosteneinsparung führt.

Die Fresnel-Linsen oder die holografischen Linsen lassen sich im Ätzverfahren unmittelbar auf die rechtwinkelig zur Faserachse liegende ebene Stirn- bzw. Austrittsseite der Faser einbringen. Die Fresnel-Linse oder die holografische Linse lässt sich auch durch die LIGA-Technik (Lithographie, Galvanoformung und Abformung) auf ein dünnes transparentes Substrat aufbringen. Die LIGA-Technik ermöglicht die Herstellung hochpräziser dreidimensionaler Mikrostrukturen aus unterschiedlichen Materialien in großen Stückzahlen. Dabei wird in dem Litographie-Schritt eine strahlungsempfindliche Polymerschicht, beispielsweise ein Fotoresist, deren Dicke einige Mikrometer bis einige Millimeter betragen kann, auf eine elektrisch leitende Substratplatte aufgebracht und durch Belichten mit energiereicher Strahlung sowie nachfolgendes nasschemisches Entwickeln strukturiert. Nach einer bevorzugten Ausführungsform ist daher vorgesehen, dass die Fresnel-Linse oder holografische Linse nach der LIGA-Technik in ein ebenes transparentes Substrat eingearbeitet und mit der rechtwinkelig zur Faserachse liegenden ebenen Stim- bzw. Austrittsseite der Glasfaser verbunden wird.

Die holografische Linse lässt sich in bekannter Weise als Transmissionshologramm herstellen (s. z.B. Tschudi und Ammann in "Praxis der Holografie, expert verlag, 7044 Ehningen, 1990, S. 458-460). Von einem die holografische Linse enthaltenden Masterhologramm lassen sich sodann nach bekannten Kopierverfahren Kopien herstellen, die dann mit den Austrittsseiten der Glasfasern verbunden werden können.

## Patentansprüche

1. Vorrichtung zur Fokussierung eines aus einer Glasfaser austretenden Laserstrahls zur Bebilderung einer Offset-Druckplatte, wobei Laserstrahlen erzeugende Laserdioden angeordnet sind und am Austrittsende der Glasfaser eine Linse oder eine Linsenanordnung vorgesehen ist, **dadurch gekennzeichnet, dass** die Linse oder Linsenanordnung eine Fresnel-Linse oder eine holografische Linse aufweist, dass die Fresnel-Linse oder holografische Linse in ein ebenes transparentes Substrat eingearbeitet und mit der rechtwinkelig zur Faserachse liegenden ebenen Stirn- bzw. Austrittsseite der Glasfaser verbunden ist.

2. Verfahren zur Herstellung einer Vorrichtung nach Anspruch 1, **dadurch gekennzeichnet, dass** die Fresnel-Linse oder holografische Linse im Ätzverfahren auf die rechtwinkelig zur Faserachse liegenden ebene Stirn- bzw. Austrittsseite der Glasfaser eingebracht wird.

3. Verfahren zur Herstellung einer Vorrichtung nach Anspruch 1, **dadurch gekennzeichnet, dass** das ebene transparente Substrat in der LIGA-Technik hergestellt, und mit der rechtwinkelig zur Faserachse liegenden Stirn - bzw. Austrittsseite einer Glasfaser verbinden wird.

## Claims

1. Device for focussing a laser beam exiting from a glass fibre for the purpose of imaging an offset printing plate, laser diodes generating laser beams being arranged, and a lens or a lens arrangement being provided at the exit end of the glass fibre, **characterized in that** the lens or lens arrangement has a Fresnel lens or a holographic lens, and **in that** the Fresnel lens or holographic lens is incorporated into a flat transparent substrate and is connected to the flat end face or exit end of the glass fibre perpendicular to the fibre axis.

2. Method for producing a device according to Claim 1, **characterized in that** the Fresnel lens or holographic lens is introduced onto the flat end face or exit end of the glass fibre perpendicular to the fibre axis by an etching method.

3. Method for producing a device according to Claim 1, **characterized in that** the flat transparent substrate is produced using the LIGA technique, and is connected to the end face or exit end of a glass fibre perpendicular to the fibre axis.

## Revendications

1. Dispositif de focalisation d'un rayon laser sortant d'une fibre de verre, pour illustration d'une plaque d'impression Offset, des diodes laser générant des rayons laser étant disposées et, à l'extrémité de sortie de la fibre de verre, étant prévue une lentille ou un agencement de lentille, **caractérisé en ce que** la lentille ou l'agencement de lentille présente une lentille de Fresnel ou une lentille holographique, **en ce que** la lentille de Fresnel ou la lentille holographique est usinée dans un substrat transparent, plan, et est reliée à la face frontale ou de sortie, plane, perpendiculaire à l'axe de fibre, de la fibre de verre.

2. Procédé de fabrication d'un dispositif selon la revendication 1, **caractérisé en ce que** la lentille de Fresnel ou la lentille holographique est incorporée, dans un procédé travaillant par gravure, sur la face frontale, respectivement de sortie, plane, perpendiculaire à l'axe de fibre, de la fibre de verre.

3. Procédé de fabrication d'un dispositif selon la revendication 1, **caractérisé en ce que** le substrat transparent plan est fabriqué selon la technique LIGA et est relié à la face frontale, respectivement de sortie, perpendiculaire à l'axe de fibre, d'une fibre de verre.
